(19)

Europäisches
Patentamt
European
Patent Office
Office européen
des brevets

(11) **EP 1 962 454 B1**

(12) **EUROPEAN PATENT SPECIFICATION**

(45) Date of publication and mention
of the grant of the patent:
**29.04.2009 Bulletin 2009/18**

(51) Int Cl.:
*H04L 12/28* *(2006.01)*          *H04W 48/16* *(2009.01)*

(21) Application number: **07102844.3**

(22) Date of filing: **21.02.2007**

(54) **Location-based pattern for scanning for wireless local area networks**

Ortsbasierte Struktur zur Erkennung von WLANs

Forme en fonction de l'emplacement pour balayer des réseaux locaux sans fil

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(72) Inventor: **Abdel-Kader, Sherif Aly
Waterloo Ontario N2K 4H7 (CA)**

(74) Representative: **Rickard, David John
Ipulse
26 Mallinson Road
London
SW11 1BP (GB)**

(43) Date of publication of application:
**27.08.2008 Bulletin 2008/35**

(73) Proprietor: **Research In Motion Limited
Waterloo, Ontario N2L 3W8 (CA)**

(56) References cited:
**EP-A- 1 610 507                 EP-A- 1 732 266
WO-A-20/07001689           US-A1- 2006 221 901**

**Description**

Scanning is the process of identifying existing wireless local area networks (WLANs). A WLAN client device may implement a scanning pattern, which comprises scan sessions and intervals that separate these scan sessions. In between the scan sessions, the WLAN client device may conserve power by deactivating parts of its WLAN interface, for example a radio and/or a controller. The duration of the intervals between successive scan sessions is typically increased until it reaches an upper limit. The same scanning pattern is used by the WLAN client device regardless of its location or the number of WLAN networks nearby. For example, if the user of the WLAN client device happens to be in a small town, camping, hiking, or simply in a location where there are no WLAN networks, then scanning for WLANs is performed just as frequently as when the user happens to be in a location with plentiful WLAN coverage.

[0002]    [0001a] WO2007/001689 teaches adjusting the inter-scan period of a mobile station (MS). The periodicity of scanning may be changed so that the MS scans for wireless networks more frequently when it receives signals with a higher degree of similarity to those detectable at the access points of the wireless networks. The frequency of scanning for wireless networks is reduced when the MS receives signals with a lower degree of similarity to those detectable at the access points.

GENERAL

One problem to be considered is how to reduce power expended by a mobile device on scanning for wireless local area networks.

A mobile device having a WLAN interface and one or more other wireless communication interfaces, may identify a location of the mobile device via one or more of the other wireless interfaces, and may calculate a value that depends on how many times said mobile device entered said location and on how many times said mobile device associated with any wireless local area network or a particular wireless local area network while at said location. The mobile device may scan for wireless local area networks or the particular wireless local area network while at said location during scan sessions that are separated by intervals, where the intervals are determined by said value. The mobile device may collect information about its WLAN activities while at a particular location.

BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a block diagram of an exemplary mobile device;

Figure 2 is a flowchart of an exemplary method in a mobile device for location driven power saving;

Figure 3 is an illustration of an exemplary communications environment involving cellular base stations and WLAN access points;

Figure 4 is a flowchart of an exemplary method in a mobile device to collect information related to WLANs at a cellular location;

Figures 5 shows exemplary patterns for scanning for WLANs;

Figure 6 is an illustration of an exemplary communications environment involving WLAN access points at different geographical locations;

Figure 7 is a flowchart of an exemplary method in a mobile device to collect information related to WLANs at a geographical location;

Figure 8 shows exemplary patterns for scanning for WLANs;

Figure 9 is an illustration of a modified location record in which one or more WLAN records are stored; and

Figures 10 and 11 are flowcharts of exemplary alternative methods for collecting information related to WLAN activity at a location.

It will be appreciated that for simplicity and clarity of illustration, elements shown in the figures have not necessarily been drawn to scale. For example, the dimensions of some of the elements may be exaggerated relative to other elements for clarity.

DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

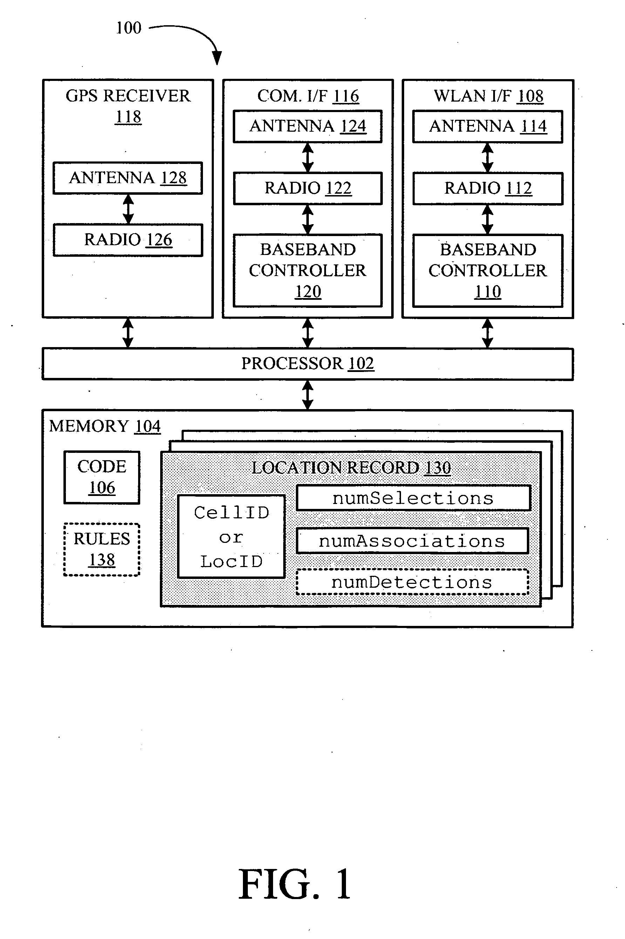

Figure 1 is a block diagram of an exemplary mobile device 100. A non-exhaustive list of examples for mobile device 100 includes a wireless-enabled laptop, a wireless-enabled cellphone, a wireless-enabled personal digital assistant (PDA), a wireless-enabled smart phone, a wireless-enabled video camera, a wireless-enabled gaming console, a wireless Internet Protocol (IP) phone and any other suitable mobile device.

Mobile device 100 comprises a processor 102 and a memory 104 coupled to processor 102. Memory 104 stores code 106 that, when executed by processor 102, may implement the methods described herein.

Mobile device 100 comprises a WLAN interface 108, compatible with one or more standards of the family of IEEE 802.11 wireless communication standards or with one or more ETSI HiperLAN standards. WLAN interface 108 is coupled to processor 102 and includes at least a baseband controller 110, a radio 112, and an antenna 114.

Mobile device 100 comprises a wireless communication interface 116 and/or a Global Positioning System (GPS) receiver 118, coupled to processor 102. Wireless communication interface 116 is compatible with one or more wireless cellular communication standards. Cellular interface 116 comprises at least a baseband controller 120 and a radio 122. Cellular interface 116 may comprise an antenna 124 or may share antenna 114. GPS receiver 118 may be able to receive signals that originate from GPS satellites and comprises at least a radio 126 and an antenna 128. Mobile device 100 may comprise other components that, for clarity, are not shown in Figure 1.

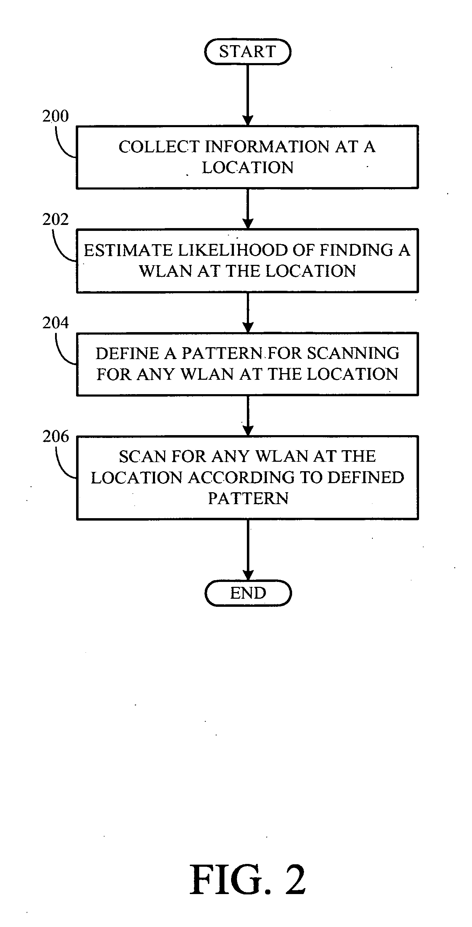

Figure 2 is a flowchart of an exemplary method in mobile device 100 for location driven power saving. For the purpose of the method of Figure 2, a "location" may be defined in any desired and appropriate way. In one example given hereinbelow, a location is a "cellular location". In another example given hereinbelow, a location is a geographical location.

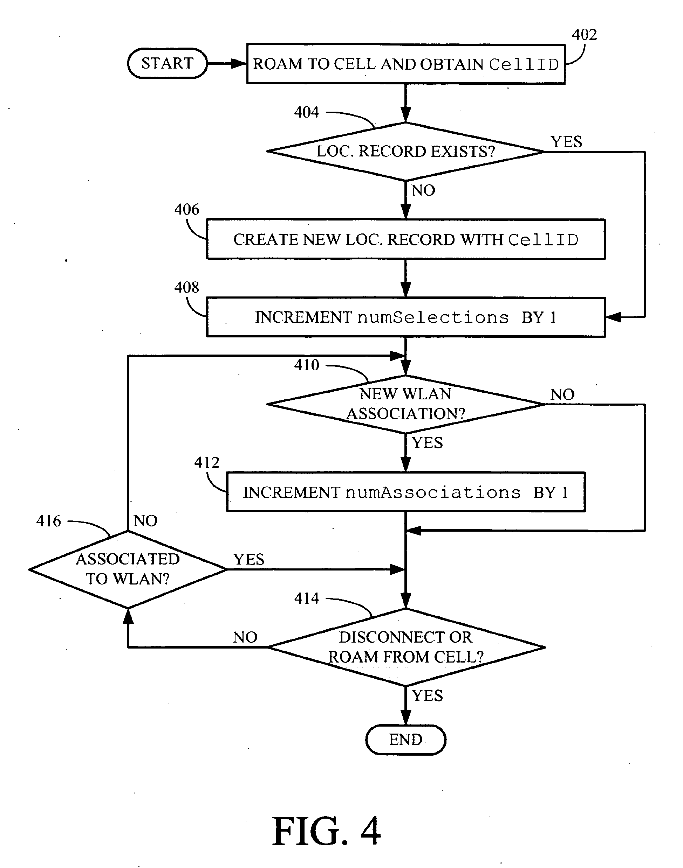

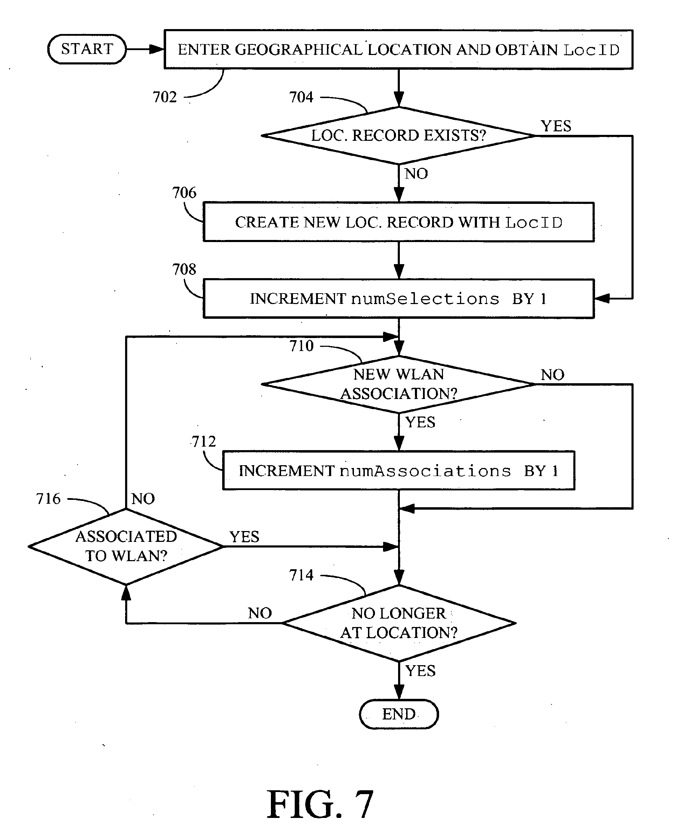

At 200, mobile device 100 collects information related to a particular location via WLAN interface 108 and any of cellular interface 116 and/or GPS receiver 118. Exemplary methods of collecting information are described hereinbelow with respect to Figures 4 and 7.

At 202, mobile device 100 estimates the likelihood of finding any and/or any particular wireless local area network at the particular location or in the vicinity thereof from information collected at 200. Examples for estimating the likelihood are described hereinbelow.

At 204, mobile device 100 defines one or more patterns for scanning for wireless local area networks at the particular location or in the vicinity thereof according to the likelihood estimated at 202. At 206, mobile device 100 scans for WLAN at the particular location or in the vicinity thereof using the one or more patterns defined or selected at 204. Defining the patterns may comprise selecting the patterns from a predefined set of patterns.

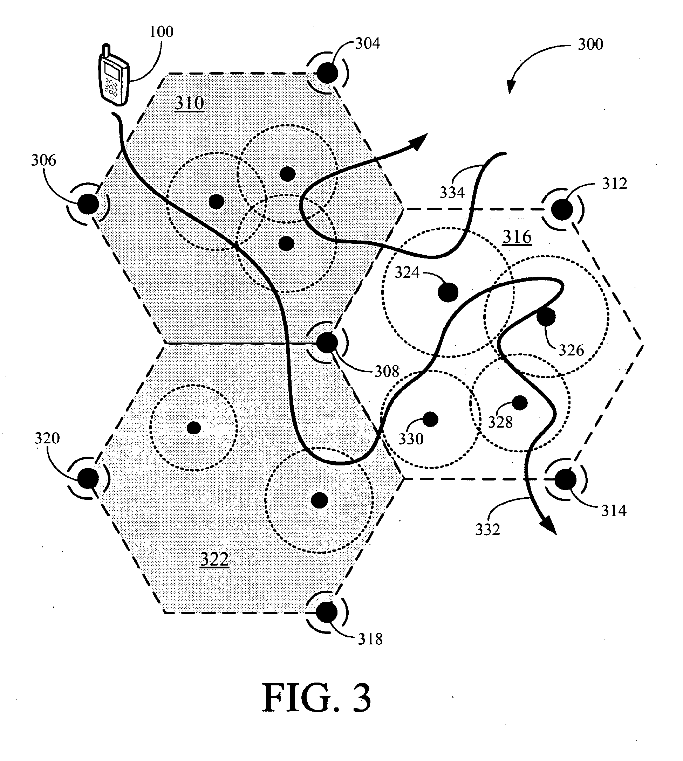

Figure 3 is an illustration of an exemplary communications environment 300 in which mobile device 100 is found. Environment 300 comprises cellular base stations and WLAN access points (AP). Base stations 304, 306 and 308 create a cell 310, base stations 312, 314 and 308 create a cell 316, and base stations 318, 320 and 308 create a cell 322. Although presented in FIG. 3 as hexagons, cells may have any physical shape. While located in any of cells 310, 316 and 322, mobile device 100 is able to communicate with one or more of the base stations. The base stations transmit identification signals that may identify the cells. An area in which mobile device 100 is able to identify a particular cell is referred to hereinbelow as a "cellular location".

Directed cells are known in the art of cellular communications. An area in which mobile device 100 is able to identify a particular directed cell is referred to hereinbelow as a "cellular location" and any references hereinbelow to cell IDs are equally applicable to directed cell IDs.

APs 324, 326, 328 and 330 are located in cell 316. Similarly, APs are located in cells 310 and 322. Although coverage areas of the APs are presented in FIG. 3 as circles, coverage areas may have any physical shape. Mobile device 100 may detect an AP while located in its coverage area and may associate itself with a detected AP.

A user of mobile device 100 may carry mobile device 100 to different places at different times, for example, as illustrated in FIG. 3 by a trajectory 332. The likelihood of mobile device 100 finding any wireless local area network or a particular wireless local area network may differ from place to place.

Mobile device 100 may maintain location records 130 for different cells, each location record 130 comprising information regarding the activity of mobile device 100 while located in the cell. An exemplary implementation of location records will now be described. Mobile device 100 may maintain a list of cells it roams to. Each item in the list is a record as follows:

```
LocationInfo RECORD {
CellID
numSelections
numAssociations
}
```

where CellID is the code identifying the cell the device just roamed to, numSelections is the number of times that mobile device 100 has roamed to the cell identified by CellID, and numAssociations is the number of times that mobile device 100 associated with any WLAN while connected to the cell identified by CellID.

Figure 4 is a flowchart of an exemplary method in mobile device 100 to collect information related to WLANs at a cellular location. At 402, mobile device 100 roams to a particular cell and obtains the CellID of the particular cell. For example, mobile device 100 may have roamed into cell 316, and CellID, identifying cell 316, may be obtained from signals transmitted by base station 308, 312 or 314. If mobile device 100 does not already have a location record for this CellID, as checked at 404, then a new location record for this CellID is created at 406, with the numSelections and numAssociations fields zeroed.

At 408, the numSelections field of the location record that either previously existed or was created at 406, is incremented by one to record that mobile device 100 has roamed to this cell.

If mobile device 100 has associated with a WLAN while located in the cell, as checked at 410, then the numAssociations field is incremented by one.

If mobile device 100 is no longer at the cellular location, either because it has disconnected from the cell or roamed to another cell, as checked at 414, the method terminates. Otherwise it is checked at 416 whether the mobile device 100 is associated to a WLAN. If so, the method proceeds to 414 and otherwise, to 410.

Consider, for example, trajectory 332 in Figure 3. As mobile device 100 is carried along trajectory 332, mobile device 100 may record, using the method of Figure 4, one selection of cell 310, in which there were two WLAN associations; one selection of cell 322, in which there was one WLAN association; and one selection of cell 316, in which there were four WLAN associations.

Another trajectory 334 is shown in Figure 3. If on another occasion mobile device 100 is carried along trajectory 334, mobile device 100 may record, using the method of Figure 4, another selection of cell 310, in which there were two WLAN associations; and another selection of cell 316, in which there was one WLAN association. After being carried along trajectories 332 and 334, the location record for cell 310 will have two in its numSelections field and four in its numAssociations field; the location record for cell 316 will have two in its numSelections field and five in its numAssociations field; and the location record for cell 322 will have one in its numSelections field and one in its numAssociations field.

Returning to the method of Figure 2, mobile device 100 may use the information collected with the method of Figure 4 to estimate at 202 the likelihood L of finding any wireless local area network at a particular location. The likelihood L may be estimated in any desired way. For example, the likelihood L may be calculated as a function of the values of the numSelections and numAssociations fields of the location record. One non-limiting example is given in Equation (1):

$$(1)\ L = \frac{numAssociations + 1}{numSelections}$$

Equations 2, 3 and 4 show the likelihoods L for cells 310, 316 and 322, respectively, using the cumulative example of trajectories 332 and 334:

$$(2)\ L(Cell\ 310) = \frac{5}{2}$$

$$(3)\ L(Cell\ 316) = \frac{6}{2}$$

$$(4)\ L(Cell\ 322) = \frac{1}{1}$$

The method of Figure 4 may be modified to record not only associations with WLANs while located in the cell but also detections of WLANs while located in the cell (limited, for example, to one detection of a particular WLAN per instance of the mobile device having roamed to the cell). To accommodate this modification, mobile device 100 may maintain a list of cells it roams to, with each item in the list being a record as follows:

```
LocationInfo RECORD {
CellID
numSelections
numDetections
numAssociations
}
```

where numDetections is the number of times that mobile device 100 has detected any WLAN while connected to the cell identified by CellID (subject, to limitations such as described above). In this modification, the likelihood L of finding any wireless local area network at a particular location may be estimated as a function of the values of the numSelections, numDetections and numAssociations fields of the location record. One non-limiting example is given in Equation (5):

$$(5) \quad L = \frac{w_1\left(numDetections\right) + w_2\left(numAssociations\right) + 1}{numSelections}$$

where $w_1$ and $w_2$ are normalized weights, $w_2$ may be larger than $w_1$, to give greater weight to WLANs with which mobile device 100 actually associated while located in the cell.

At 204 of the method of Figure 2, mobile device 100 may use the likelihood values shown in equations 2, 3 and 4 to define patterns for scanning for WLAN in the respective locations. The patterns may be defined in any desired way. One non-limiting example is given in Equation 6:

$$(6) \quad D(Location) = \begin{cases} D_{MIN}, & \dfrac{D_0}{L} < D_{MIN} \\[2mm] \dfrac{D_0}{L}, & D_{MIN} \leq \dfrac{D_0}{L} \leq D_{MAX}(L) \\[2mm] D_{MAX}(L), & \dfrac{D_0}{L} > D_{MAX}(L) \end{cases}$$

where D is the time interval between successive scan sessions for WLANs at a location, and $D_0$ represents a series of default time intervals that define a pattern for scanning for WLAN. These intervals are generally known as backoff intervals. In equation 5, $D_{MAX}(L)$ represents a maximal limit and $D_{MIN}$ represents a minimal limit for D.

$D_{MAX}(L)$ may be equal to a constant $D_{MAX}$ value for all values of likelihood L. A non-limiting example of $D_{MAX}$ is 256 seconds. Alternatively, $D_{MAX}(L)$ may be derived from a constant $D_{MAX}$ value, for example using Equation 7:

$$(7) \quad D_{MAX}(L) = \frac{D_{MAX}}{L}$$

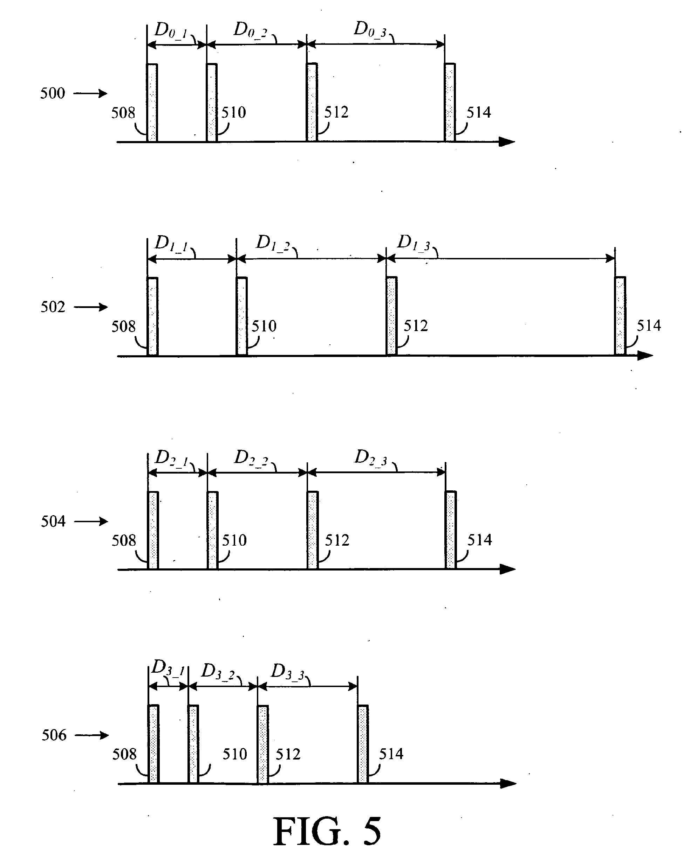

Figure 5 shows exemplary patterns 500, 502, 504 and 506 for scanning for WLANs. Scan pattern 500 comprises scan sessions 508, 510, 512 and 514 during which scanning for WLANs occurs. Default interval $D_{0\_1}$ separates scan sessions 508 and 510, default interval $D_{0\_2}$ separates scan sessions 510 and 512, and default interval $D_{0\_3}$ separates scan sessions 512 and 514.

Scan pattern 502 is an adjustment of scan pattern 500 according to equation 6 with a likelihood L of 2/3. Scan pattern 502 comprises scan sessions 508, 510, 512 and 514. Intervals $D_{0\_1}$, $D_{0\_2}$ and $D_{0\_3}$ of pattern 500 are replaced with longer intervals $D_{1\_1}$, $D_{1\_2}$ and $D_{1\_3}$, respectively, in pattern 502.

Scan pattern 504 is an adjustment of scan pattern 500 according to equation 6 with a likelihood L of 1. Scan pattern 504 comprises scan sessions 508, 510, 512 and 514. Intervals $D_{0\_1}$, $D_{0\_2}$ and $D_{0\_3}$ of pattern 500 are replaced with equivalent intervals $D_{2\_1}$, $D_{2\_2}$ and $D_{2\_3}$, respectively, in pattern 504.

Scan pattern 506 is an adjustment of scan pattern 500 according to equation 6 with a likelihood L of 5/3. Scan pattern 506 comprises scan sessions 508, 510, 512 and 514. Intervals $D_{0\_1}$, $D_{0\_2}$ and $D_{0\_3}$ of pattern 500 are replaced with shorter intervals $D_{3\_1}$, $D_{3\_2}$ and $D_{3\_3}$, respectively, in pattern 506.

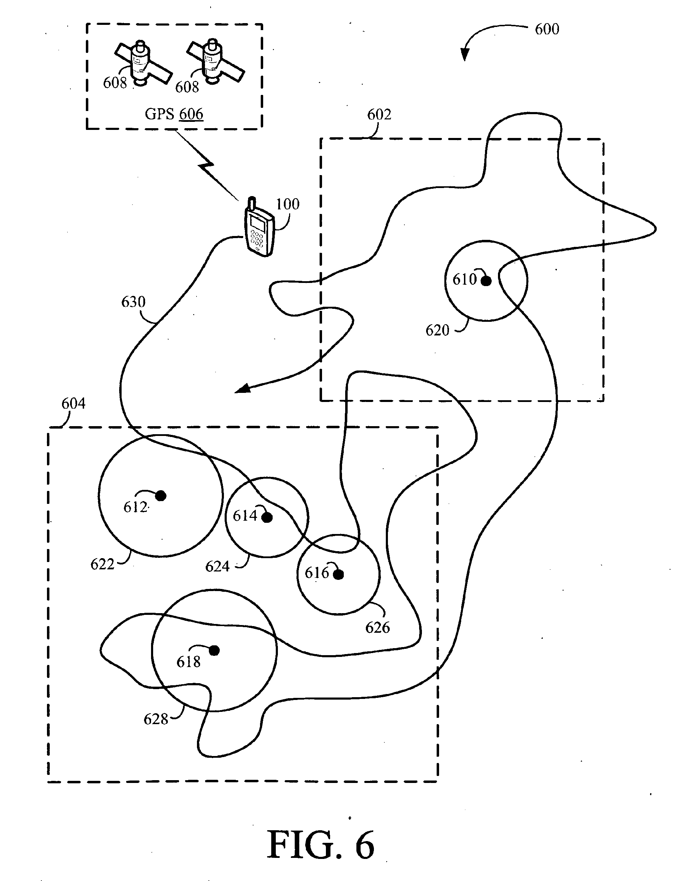

Figure 6 is an illustration of an exemplary communications environment 600 in which mobile device 100 is found. Environment 600 comprises WLAN access points at different geographical locations 602 and 604 which, for simplicity, are shown to have square shapes. Geographical locations may be defined by any one of many different ways and may have different sizes and shapes. For example, a geographical location may be defined by a single longitude/latitude point and a radius around that point. In another example, a geographical location may be defined by two longitude/latitude points that define a rectangular area.

Environment 600 also comprises GPS satellite system 606 that includes satellites 608 of which only two are shown. Mobile device 100 comprises GPS receiver 118 and via GPS receiver is able to receive signals transmitted by satellites 608. Mobile device 100 may further be able to estimate its geographic longitude and latitude coordinates (to some degree of certainty) from signals received from satellites 608.

AP 610 is located in geographical location 602 and APs 612, 614, 616 and 618 are located in geographical location 604. Although coverage areas of the APs are presented in FIG. 6 as circles, coverage areas may have any physical shape. Mobile device 100 may detect an AP while located in its coverage area and may associate itself with a detected AP.

A user of mobile device may carry mobile device 100 to different places at different times, for example, as illustrated in FIG. 6 by a trajectory 630. The likelihood of mobile device 100 finding any wireless local area network or a particular wireless local area network may differ from place to place.

Mobile device 100 may maintain location records 130 for different geographical locations, each location record 130 comprising information regarding the activity of mobile device 100 while located in the geographical location. An exemplary implementation of location records will now be described. Mobile device 100 may maintain a list of geographical locations it enters. Each item in the list is a record as follows:

```
LocationInfo RECORD {
LocID
numSelections
numAssociations
}
```

where LocID is an identification of the geographical location or a reference or partial information which mobile device 100 can further interpret, numSelections is the number of times that mobile device 100 has entered the geographical location identified by LocID, and numAssociations is the number of times that mobile device 100 associated with any WLAN while located in the geographical location identified by LoCID.

Figure 7 is a flowchart of an exemplary method in mobile device 100 to collect information related to WLANs at a geographical location. At 702, mobile device 100 enters a particular geographical location and identifies the geographical location, for example, by comparing its own longitude and latitude coordinates to information stored in the *LocID* field of various existing location records.

If mobile device 100 does not already have a location record for this LocID, as checked at 704, then a new location record for this LocID is created at 706, with the numSelections and numAssociations fields zeroed. Mobile device 100 may store in memory 104 rules 138 how to define new geographical locations.

At 708, the numSelections field of the location record that either previously existed or was created at 706, is incremented by one to record that mobile device 100 has entered this geographical location.

If mobile device 100 has associated with a WLAN while located in the cell, as checked at 710, then the numAssociations field is incremented by one.

If mobile device 100 is no longer at the geographical location, for example, because its current longitude and latitude coordinates are no longer within the geographical location, as checked at 714, the method terminates. Otherwise it is checked at 716 whether the mobile device 100 is associated to a WLAN. If so, the method proceeds to 714 and otherwise, to 710.

Consider, for example, trajectory 630 in Figure 6. As mobile device 100 is carried along trajectory 630, mobile device 100 may record, using the method of Figure 6, two entries into geographical location 604, where there were five WLAN associations, and four entries into geographical location 602, where there was one WLAN association.

Returning to the method of Figure 2, mobile device 100 may use the information collected with the method of Figure 7 to estimate at 202 the likelihood L of finding any wireless local area network at a particular location. The likelihood L may be estimated in any desired way. One non-limiting example in given above in Equation 1.

Equations 8 and 9 shows the likelihoods L for the locations 602 and 604, respectively, using the example of trajectory 630:

$$(8) \quad L(Location \; 602) = \frac{2}{4}$$

$$(9) \quad L(Location \; 604) = \frac{6}{2}$$

The method of Figure 7 may be modified to record not only associations with WLANs while located in the geographical location but also detections of WLANs while located in the geographical location (limited, for example, to one detection of a particular WLAN per instance of the mobile device having entered the geographical location). To accommodate this modification, mobile device 100 may maintain a list of geographical locations it enters, with each item in the list being a record as follows:

```
LocationInfo RECORD {
LocID
numSelections
numDetections
numAssociations
}
```

where numDetections is the number of times that mobile device 100 has detected any WLAN while located in the geographical location identified by LocID (subject, to limitations such as described above). In this modification, the likelihood L of finding any wireless local area network at a particular location may be estimated as a function of the values of the numSelections, numDetections and numAssociations fields of the location record. One non-limiting example of such a function is given in Equation (5) above.

At 204 of the method of Figure 2, mobile device 100 may use the likelihood values shown in equations 8 and 9 to define patterns for scanning for WLAN in the respective locations. The patterns may be defined in any desired way. One non-limiting example is given in Equation 6 above.

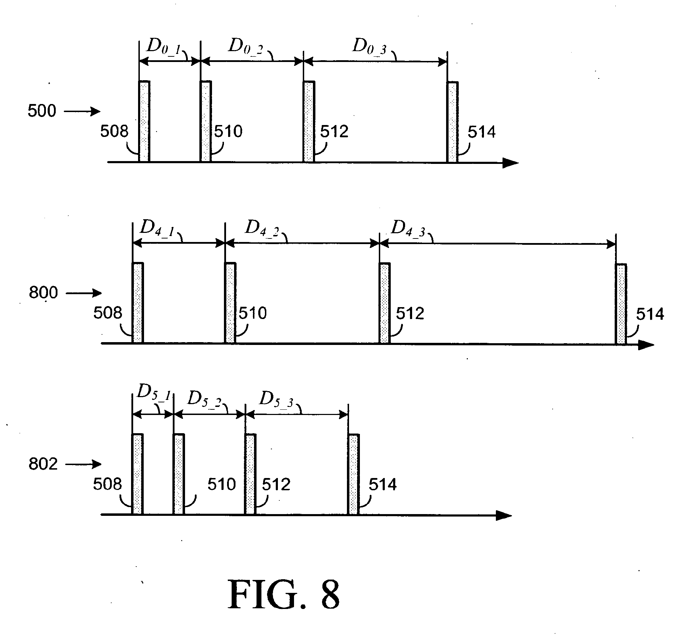

Figure 8 shows exemplary scan patterns 500, 800 and 802. Scan pattern 800 is an adjustment of scan pattern 500 for geographical location 602 according to equation 6 with a likelihood L of 2/4. Scan pattern 800 comprises scan sessions 508, 510, 512 and 514. Intervals $D_{0\_1}$, $D_{0\_2}$ and $D_{0\_3}$ of pattern 500 are replaced with longer intervals $D_{4\_1}$, $D_{4\_2}$ and $D_{4\_3}$, respectively, in pattern 800.

Scan pattern 804 is an adjustment of scan pattern 500 according to equation 6 with a likelihood L of 6/2. Scan pattern 804 comprises scan sessions 508, 510, 512 and 514. Intervals $D_{0\_1}$, $D_{0\_2}$ and $D_{0\_3}$ of pattern 500 are replaced with shorter intervals $D_{5\_1}$, $D_{5\_2}$ and $D_{5\_3}$, respectively, in pattern 804.

The preceding description describes the collection and use of the numAssociations and/or numDetections parameters on a per-cell or per-geographical location basis, where the values of those parameters may count different WLANs with which mobile device 100 associated or which mobile device 100 detected while located in the cell or geographical location.

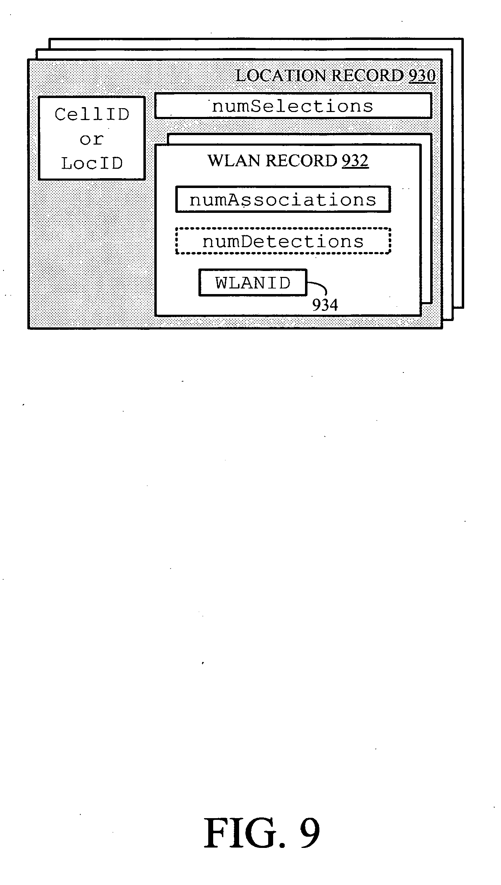

The methods and records described hereinabove may be modified to collect and use the numAssociations and/or numDetections parameters on a per-WLAN basis within each cell or geographical location. Figure 9 is an illustration of a modified location record 930 in which one or more WLAN records 932 are stored. A WLAN record 932 identifies the WLAN for which the record is being kept with a WLAN I D field 934. The value of the WLANID field 934 may be any identifier that uniquely identifies the WLAN within the cell or geographical location. For example, the value may be the service set identifier (SSID) of the WLAN. Each WLAN record 932 has its own numAssociations and/or numDetections fields.

An exemplary implementation of such location records will now be described. Mobile device 100 may maintain a list of cells it roams to. Each item in the list is a record as follows:

```
LocationInfo RECORD {
CellID
numSelections
WLANInfo [MAX_WLANS]
}
```

and the record WLANInfo is as follows:

```
WLANAssocInfo RECORD {
WLANID
NumAssociations
}
```

Likewise, mobile device 100 may maintain a list of geographical locations it enters. Each item in the list is a record as follows:

```
LocationInfo RECORD {
LocID
numSelections
WLANInfo[MAX_WLANS]
}
```

where the record WLANInfo is as described above.

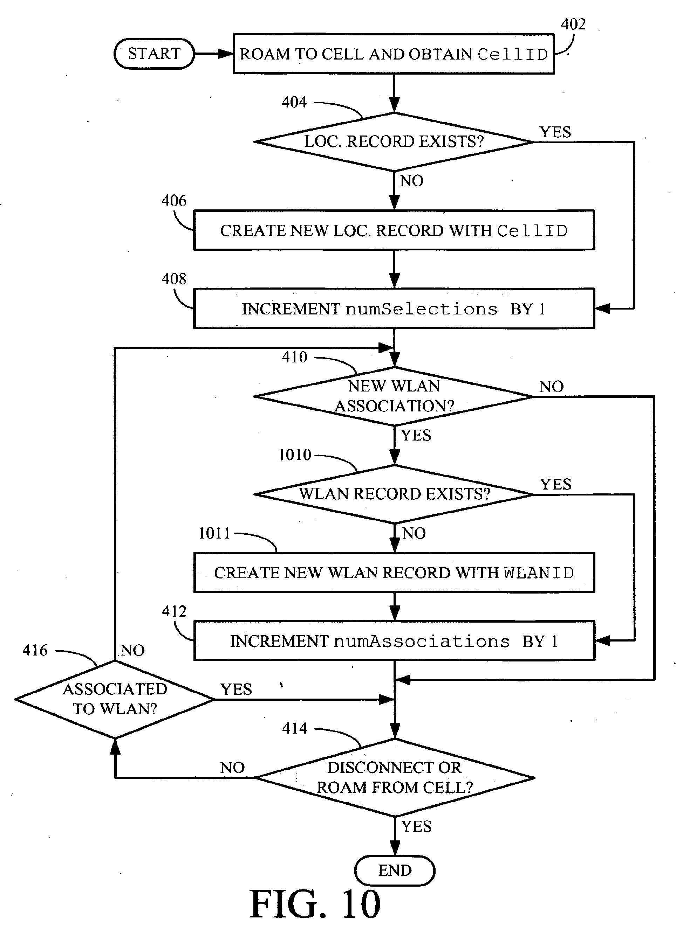

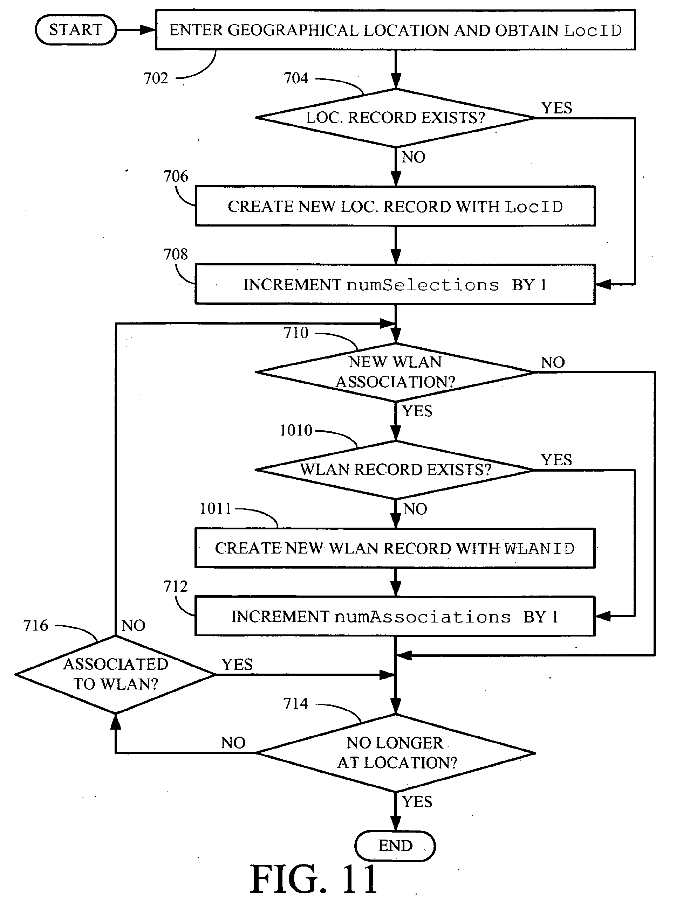

Figures 10 and 11 are flowcharts of exemplary alternative methods for collecting WLAN information. The method of Figure 10 differs from the method of Figure 4 (and the method of Figure 11 differs from the method of Figure 7) in that after a new WLAN association is identified at 410 (710), it is checked at 1010 whether a WLAN record for the newly associated WLAN exists within the location record. If not, then a new WLAN record with a WLANID that identifies the WLAN and with numAssociations zeroed is created at 1011. Then the method proceeds to 412 (712). The number of WLAN records kept per cell or geographical location may be unlimited, or may be limited, for example, to no more than three.

The method of Figure 2 may then be modified to estimate the likelihood of finding a particular WLAN at the location, defining a pattern for scanning for the particular WLAN at the location, and scanning for the particular WLAN at the location according to the defined pattern. For example, the values of numAssociations and/or numDetections used to calculate the estimated likelihood L are the values stored in the WLAN record 932 of the location record 930.

Computer-executable instructions for managing communications such as in the above-described methods may be stored on a form of computer readable media. Computer readable media includes volatile and nonvolatile, removable and non-removable media implemented in any method or technology for storage of information such as computer readable instructions, data structures, program modules or other data. Computer readable media includes, but is not limited to, random access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium which can be used to store the desired instructions and which can be accessed by Internet or other computer network forms of access.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method in a mobile device (100) having a wireless local area network interface (108) and one or more other wireless interfaces (116, 118), the method comprising:

   identifying a location (310, 316, 322, 602, 604) of said mobile device (100) via one or more of said other wireless interfaces (116, 118);
   calculating a value that depends, on how many times said mobile device (100) entered said location (310, 316, 322, 602, 604) and on how many times said mobile device (100) associated with any wireless local area network or a particular wireless local area network while at said location (310, 316, 322, 602, 604); and
   scanning for wireless local area networks or said particular wireless local area network while at said location during scan sessions that are separated by intervals, where the intervals are determined by said value.

2. The method of claim 1, wherein the value further depends on how many times said mobile device (100) detected any wireless local area network while at said location (310, 316,322,602,604).

3. The method of claim 1, wherein the value further depends on how many times said mobile device (100) detected the particular wireless local area network while at said location (310, 316, 322, 602, 604).

4. The method of any one of claims 1 to 3, wherein one of said one or more other wireless interfaces is a cellular interface (116), and said location is a cellular location (310,316,322).

5. The method of any one of claims 1 to 3, wherein one of said one or more other wireless interfaces is a Global Positioning System receiver (118), and said location is a geographical location (602,604).

6. The method of any one of the preceding claims, further comprising:

collecting information about wireless local area network activity of said mobile device (100) while at said location (310, 316, 322, 602, 604).

7. A mobile device (100) comprising:

a processor (102);
a wireless local area network interface (108) coupled to said processor (102), through which said mobile device (100) is able to scan for wireless local area networks;
one or more other wireless communication interfaces (116, 118) coupled to said processor (102), through which said mobile device is able to identify a location (310, 316, 322, 602, 604) of said mobile device (100); and
a memory (104) arranged to store executable code means (106) which, when executed by said processor (102), is arranged to calculate a value that depends, on how many times said mobile device (100) entered said location (310, 316, 322, 602, 604) and on how many times said mobile device (100) associated with any wireless local area network or a particular wireless local area network while at said location (310, 316, 322, 602, 604) and is arranged to control said wireless local area network interface (108) to scan for wireless local area networks or said particular wireless local area network while at said location during scan sessions that are separated by intervals, where the intervals are determined by said value.

8. The mobile device (100) of claim 7, wherein the value further depends on how many times said mobile device (100) detected any wireless local area network while at said location (310, 316, 322, 602, 604).

9. The mobile device (100) of claim 7, wherein the value further depends on how many times said mobile device (100) detected the particular wireless local area network while at said location (310, 316, 322, 602, 604).

10. The mobile device (100) of any one of claims 7 to 9, wherein one of said one or more other wireless interfaces is a cellular interface (116), and said location is a cellular location (310, 316, 322).

11. The mobile device (100) of any one of claims 7 to 10, wherein one of said one or more other wireless interfaces is a Global Positioning System receiver (118), and said location is a geographical location (602, 604).

12. The mobile device (100) of any one of claims 7 to 11, wherein said executable code means (106), when executed by said processor (102), is further arranged to collect information about wireless local area network activity of said mobile device (100) while at said location.

13. A computer-readable medium (104) having computer-executable instructions (106) which when executed by a mobile device (100) having a wireless local area network interface (108) and one or more other wireless communication interfaces (116, 118), result in said mobile device (100) performing the method of any one of claims 1 to 6.

**Patentansprüche**

1. Verfahren in einem mobilen Gerät (100), das eine WLAN-Schnittstelle (108) und eine oder mehrere Drahtlos-Schnittstelle(n) (116, 118) besitzt, wobei das Verfahren umfasst:

Identifizieren eines Standorts (310, 316, 322, 602, 604) des mobilen Geräts (100) über eine oder mehrere der Drahtlos-Schnittstellen (116, 118);
Berechnen eines Wertes, der davon abhängig ist, wie oft das mobile Gerät (100) den betreffenden Standort (310, 316, 322, 602, 604) aufgesucht hat, sowie davon, wie oft sich das mobile Gerät (100) mit einem beliebigen WLAN oder einem bestimmten WLAN assoziiert hat, während es sich an dem Standort (310, 316, 322, 602, 604) befand; und

Suchen nach WLANs oder dem bestimmten WLAN, während sich das mobile Gerät an dem Standort befindet, in Scan-Sitzungen, die durch Intervalle voneinander getrennt sind, wobei die Intervalle durch den besagten Wert bestimmt werden.

2.  Verfahren nach Anspruch 1, wobei der Wert ferner davon abhängig ist, wie oft das mobile Gerät (100) ein beliebiges WLAN erkannt hat, während es sich an dem Standort (310, 316, 322, 602, 604) befand.

3.  Verfahren nach Anspruch 1, wobei der Wert ferner davon abhängt, wie oft das mobile Gerät (100) das bestimmte WLAN erkannt hat, während es sich an dem Standort (310, 316, 322, 602, 604) befand.

4.  Verfahren nach einem der Ansprüche 1 bis 3, wobei eine der einen oder mehreren Drahtlos-Schnittstelle(n) eine Zellularschnittstelle (116) und der Standort ein Zellularstandort (310, 316, 322) ist.

5.  Verfahren nach einem der Ansprüche 1 bis 3, wobei eine der einen oder mehreren Drahtlos-Schnittstelle(n) ein GPS-Empfänger (118) und der Standort ein geografischer Standort (602, 604) ist.

6.  Verfahren nach einem der vorstehenden Ansprüche, ferner umfassend:

    Erfassen von Informationen zur WLAN-Aktivität des mobilen Geräts (100), während es sich an dem Standort (310, 316, 322, 602, 604) befindet.

7.  Mobiles Gerät (100), umfassend:

    einen Prozessor (102);
    eine WLAN-Schnittstelle (108), die mit dem Prozessor (102) verbunden ist, über die das mobile Gerät (100) nach WLANs suchen kann;
    eine oder mehrere Drahtlos-Kommunikationsschnittstelle(n) (116, 118), die mit dem Prozessor (102) verbunden ist/sind, über die das mobile Gerät (100) einen Standort (310, 316, 322, 602, 604) des mobilen Geräts (100) identifizieren kann; und
    einen Speicher (104), der dafür ausgelegt ist, ein ausführbares Codemittel (106) zu speichern, das, wenn es von dem Prozessor (102) ausgeführt wird, dafür ausgelegt ist, einen Wert zu berechnen, der davon abhängig ist, wie oft das mobile Gerät (100) den betreffenden Standort (310, 316, 322, 602, 604) aufgesucht hat, sowie davon, wie oft sich das mobile Gerät (100) mit einem beliebigen WLAN oder einem bestimmten WLAN assoziiert hat, während es sich an dem Standort (310, 316, 322, 602, 604) befand, und dafür ausgelegt ist, die WLAN-Schnittstelle (108) zu steuern, um nach WLANs oder dem bestimmten WLAN zu suchen, während sich das mobile Gerät an dem Standort befindet, in Scan-Sitzungen, die durch Intervalle voneinander getrennt sind, wobei die Intervalle durch den besagten Wert bestimmt werden.

8.  Mobiles Gerät (100) nach Anspruch 7, wobei der Wert ferner davon abhängig ist, wie oft das mobile Gerät (100) ein beliebiges WLAN erkannt hat, während es sich an dem Standort (310, 316, 322, 602, 604) befand.

9.  Mobiles Gerät (100) nach Anspruch 7, wobei der Wert ferner davon abhängig ist, wie oft das mobile Gerät (100) das bestimmte WLAN erkannt hat, während es sich an dem Standort (310, 316, 322, 602, 604) befand.

10. Mobiles Gerät (100) nach einem der Ansprüche 7 bis 9, wobei eine der einen oder mehreren Drahtlos-Schnittstelle(n) eine Zellularschnittstelle (116) und der Standort ein Zellularstandort (310, 316, 322) ist.

11. Mobiles Gerät (100) nach einem der Ansprüche 7 bis 10, wobei eine der einen oder mehreren Drahtlos-Schnittstelle(n) ein GPS-Empfänger (118) und der Standort ein geografischer Standort (602, 604) ist.

12. Mobiles Gerät (100) nach einen der Ansprüche 7 bis 11, wobei das ausführbare Codemittel (106), wenn es von dem Prozessor (102) ausgeführt wird, ferner dafür ausgelegt ist, Informationen zur WLAN-Aktivität des mobilen Geräts (100) zu erfassen, während es sich an dem Standort befindet.

13. Computerlesbarer Datenträger (104), der von einem Computer ausführbare Anweisungen (106) enthält, die, wenn sie von einem mobilen Gerät (100), das eine WLAN-Schnittstelle (108) und eine oder mehrere weitere Drahtlos-Kommunikationsschnittstelle(n) (116, 118) besitzt, bewirkt, dass das mobile Gerät (100) das Verfahren nach einem der Ansprüche 1 bis 6 ausführt.

**Revendications**

1. Procédé dans un dispositif mobile (100) présentant une interface de réseau local sans fil (108) et une ou plusieurs autres interfaces sans fil (116, 118), le procédé comprenant les étapes suivantes :

   identification d'un emplacement (310, 316, 322, 602, 604) dudit dispositif mobile (100) par l'intermédiaire d'une ou plusieurs desdites autres interfaces sans fil (116, 118) ;
   calcul d'une valeur dépendant du nombre de fois que ledit dispositif mobile (100) est arrivé audit emplacement (310, 316, 322, 602, 604) et du nombre de fois que ledit dispositif mobile (100) s'est associé à un réseau local sans fil quelconque ou à un réseau local sans fil particulier pendant qu'il se trouvait audit emplacement (310, 316, 322, 602, 604) ; et
   balayage des réseaux locaux sans fil quelconques ou dudit réseau local sans fil particulier pendant qu'il se trouve audit emplacement, au cours de sessions de balayage séparées par des intervalles, les intervalles étant définis par ladite valeur.

2. Procédé selon la revendication 1, dans lequel la valeur dépend en outre du nombre de fois que ledit dispositif mobile (100) a détecté un réseau local sans fil quelconque pendant qu'il se trouvait audit emplacement (310, 316, 322, 602, 604).

3. Procédé selon la revendication 1, dans lequel la valeur dépend en outre du nombre de fois que ledit dispositif mobile (100) a détecté le réseau local sans fil particulier pendant qu'il se trouvait audit emplacement (310, 316, 322, 602, 604).

4. Procédé selon l'une quelconque des revendications 1 à 3, dans lequel l'une desdites une ou plusieurs autres interfaces sans fil est une interface cellulaire (116) et ledit emplacement est un emplacement cellulaire (310, 316, 322).

5. Procédé selon l'une quelconque des revendications 1 à 3, dans lequel l'une desdites une ou plusieurs autres interfaces sans fil est un récepteur de système de positionnement global (118) et ledit emplacement est un emplacement géographique (602, 604).

6. Procédé selon l'une quelconque des revendications précédentes, comprenant en outre l'étape suivante :

   collecte d'informations concernant l'activité sur le réseau local sans fil dudit dispositif mobile (100) pendant qu'il se trouve audit emplacement (310, 316, 322, 602, 604).

7. Dispositif mobile (100) comprenant :

   un processeur (102) ;
   une interface de réseau local sans fil (108) associée audit processeur (102), par l'intermédiaire de laquelle ledit dispositif mobile (100) peut balayer les réseaux locaux sans fil ;
   une ou plusieurs autres interfaces de communication sans fil (116, 118) associées audit processeur (102), par l'intermédiaire desquelles ledit dispositif mobile peut identifier un emplacement (310, 316, 322, 602, 604) dudit dispositif mobile (100) ; et
   une mémoire (104) pouvant stocker des moyens de code pouvant être exécutés (106) qui, lorsqu'ils sont exécutés par ledit processeur (102), peuvent calculer une valeur dépendant du nombre de fois que ledit dispositif mobile (100) est arrivé audit emplacement (310, 316, 322, 602, 604) et du nombre de fois que ledit dispositif mobile (100) s'est associé à un réseau local sans fil quelconque ou à un réseau local sans fil particulier pendant qu'il se trouvait audit emplacement (310, 316, 322, 602, 604), et peuvent commander ladite interface de réseau local sans fil (108) de balayer des réseaux locaux sans fil quelconques ou ledit réseau local sans fil particulier pendant qu'il se trouve audit emplacement, au cours de sessions de balayage séparées par des intervalles, les intervalles étant définis par ladite valeur.

8. Dispositif mobile (100) selon la revendication 7, dans lequel la valeur dépend en outre du nombre de fois que ledit dispositif mobile (100) a détecté un réseau local sans fil quelconque pendant qu'il se trouvait audit emplacement (310, 316, 322, 602, 604).

9. Dispositif mobile (100) selon la revendication 7, dans lequel la valeur dépend en outre du nombre de fois que ledit dispositif mobile (100) a détecté un réseau local sans fil particulier pendant qu'il se trouvait audit emplacement (310, 316, 322, 602, 604).

10. Dispositif mobile (100) selon l'une quelconque des revendications 7 à 9, dans lequel l'une desdites une ou plusieurs autres interfaces sans fil est une interface cellulaire (116) et ledit emplacement est un emplacement cellulaire (310, 316, 322).

11. Dispositif mobile (100) selon l'une quelconque des revendications 7 à 10, dans lequel l'une desdites une ou plusieurs autres interfaces sans fil est un récepteur de système de positionnement global (118) et ledit emplacement est un emplacement géographique (602,604).

12. Dispositif mobile (100) selon l'une quelconque des revendications 7 à 11, dans lequel lesdits moyens de code pouvant être exécutés (106), lorsqu'ils sont exécutés par ledit processeur (102), peuvent en outre collecter des informations concernant l'activité sur le réseau local sans fil dudit dispositif mobile (100) pendant qu'il se trouve audit emplacement.

13. Support lisible par ordinateur (104) stockant des instructions pouvant être exécutées par ordinateur (106) qui, lorsqu'elles sont exécutées par un dispositif mobile (100) présentant une interface de réseau local sans fil (108) et une ou plusieurs autres interfaces de communication sans fil (116, 118), amènent ledit dispositif mobile (100) à mettre en oeuvre le procédé selon l'une quelconque des revendications 1 à 6.

100

GPS RECEIVER
118

ANTENNA 128

RADIO 126

COM. I/F 116

ANTENNA 124

RADIO 122

BASEBAND
CONTROLLER
120

WLAN I/F 108

ANTENNA 114

RADIO 112

BASEBAND
CONTROLLER
110

PROCESSOR 102

MEMORY 104

CODE
106

RULES
138

LOCATION RECORD 130

CellID
or
LocID

numSelections

numAssociations

numDetections

# FIG. 1

START

200
COLLECT INFORMATION AT A LOCATION

202
ESTIMATE LIKELIHOOD OF FINDING A WLAN AT THE LOCATION

204
DEFINE A PATTERN FOR SCANNING FOR ANY WLAN AT THE LOCATION

206
SCAN FOR ANY WLAN AT THE LOCATION ACCORDING TO DEFINED PATTERN

END

# FIG. 2

FIG. 3

START → ROAM TO CELL AND OBTAIN CellID  402

404 LOC. RECORD EXISTS? — YES

NO

406 CREATE NEW LOC. RECORD WITH CellID

408 INCREMENT numSelections BY 1

410 NEW WLAN ASSOCIATION? — NO

YES

412 INCREMENT numAssociations BY 1

416 ASSOCIATED TO WLAN? — YES
NO

414 DISCONNECT OR ROAM FROM CELL?
NO

YES

END

# FIG. 4

FIG. 5

FIG. 6

START → ENTER GEOGRAPHICAL LOCATION AND OBTAIN LocID

702

704 → LOC. RECORD EXISTS? — YES

NO

706 → CREATE NEW LOC. RECORD WITH LocID

708 → INCREMENT numSelections BY 1

710 → NEW WLAN ASSOCIATION? — NO

YES

712 → INCREMENT numAssociations BY 1

716 → ASSOCIATED TO WLAN? — YES

NO

714 → NO LONGER AT LOCATION? — NO

YES

END

# FIG. 7

FIG. 8

LOCATION RECORD 930

CellID
or
LocID

numSelections

WLAN RECORD 932

numAssociations

numDetections

WLANID
934

# FIG. 9

START → ROAM TO CELL AND OBTAIN CellID — 402

404 — LOC. RECORD EXISTS? — YES

NO

406 — CREATE NEW LOC. RECORD WITH CellID

408 — INCREMENT numSelections BY 1

410 — NEW WLAN ASSOCIATION? — NO

YES

1010 — WLAN RECORD EXISTS? — YES

NO

1011 — CREATE NEW WLAN RECORD WITH WLANID

412 — INCREMENT numAssociations BY 1

416 — NO — ASSOCIATED TO WLAN? — YES

414 — DISCONNECT OR ROAM FROM CELL? — NO

YES

END

# FIG. 10

**FIG. 11**

START → ENTER GEOGRAPHICAL LOCATION AND OBTAIN LocID

702 · 704

LOC. RECORD EXISTS? — YES

NO

706 — CREATE NEW LOC. RECORD WITH LocID

708 — INCREMENT numSelections BY 1

710 — NEW WLAN ASSOCIATION? — NO

YES

1010 — WLAN RECORD EXISTS? — YES

NO

1011 — CREATE NEW WLAN RECORD WITH WLANID

712 — INCREMENT numAssociations BY 1

716 — ASSOCIATED TO WLAN? — YES

NO

714 — NO LONGER AT LOCATION? — NO

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007001689 A